(19) Europäisches Patentamt / European Patent Office / Office européen des brevets

(11) **EP 1 256 437 B1**

(12) **EUROPÄISCHE PATENTSCHRIFT**

(45) Veröffentlichungstag und Bekanntmachung des Hinweises auf die Patenterteilung:
**14.10.2009 Patentblatt 2009/42**

(51) Int Cl.:
*B29C 70/58* (2006.01)    *B29C 47/50* (2006.01)
*B29C 47/00* (2006.01)    *C08J 3/22* (2006.01)

(21) Anmeldenummer: **02007543.8**

(22) Anmeldetag: **03.04.2002**

(54) **Verfahren zur Herstellung IR-reflektierender Körper aus schlagzähem Kunststoff**

Method of manufacturing of infrared reflecting articles made from impact resistant plastic

Procédé de fabrication d'articles réfléchissant le rayonnement infrarouge en matière polymérique résistant au choc

(84) Benannte Vertragsstaaten:
**AT BE CH CY DE DK ES FI FR GB GR IE IT LI LU MC NL PT SE TR**

(30) Priorität: **08.05.2001 DE 10122315**

(43) Veröffentlichungstag der Anmeldung:
**13.11.2002 Patentblatt 2002/46**

(73) Patentinhaber: **Evonik Röhm GmbH
64293 Darmstadt (DE)**

(72) Erfinder:
• **Scharnke, Wolfgang
64283 Darmstadt (DE)**
• **Mende, Volker
64297 Darmstadt (DE)**

(56) Entgegenhaltungen:
EP-A- 0 548 822          EP-A- 0 733 754
DE-A- 2 544 245          DE-A- 2 719 170
US-A- 4 057 607

**Beschreibung**

Die Erfindung betrifft ein Verfahren zur Herstellung IR-reflektierender Körner aus schlagzähem Kunststoff.

DE 25 44 245 beschreibt die Verwendung von Scheiben aus Polymethylmethacrylat mit einem Gehalt an lichtreflektierenden parallel zur Oberfläche ausgerichteten Teilchen. Die verwendeten Pigmentteilchen bewirken dabei eine selektive Reflektion im Infrarot-Bereich, die sich durch eine Selektivitätskennzahl von größer 1 charakterisieren läßt. Als IR-reflektierende Pigmente werden $TiO_2$, Bleicarbonat und Wismutoxychlorid genannt. Die Verwendung von $TiO_2$-Pigment vom Anatas-Typ, das in einer Schichtdicke von ca. 120 $\mu$m auf Glimmer-Plättchen niedergeschlagen ist, wird als besonders vorteilhaft hervorgehoben.

Die Teilchen werden in Konzentrationen von 0,01 bis 1 Gew.-% in einem teilweise polymerisierten Methymethacrylat dispergiert. Die Suspension wird anschließend in einer Kammer zwischen Glasplatten zu Polymethylmethacrylat auspolymerisiert. Lagert man die Kammer dabei waagerecht, können sich die enthaltenen Pigment-Glimmer-Teilchen beim Absinken verstärkt parallel zur Scheibenoberfläche ausrichten, so daß der gewünschte IR-reflektierende Effekt in den auspolymerisierten Scheiben auftritt. Diese Parallelausrichtung der IR-reflektierenden Teilchen kann nochmals verbessert werden, wenn die Glasplatten der Kammer zusätzlich einige Male zueinander kreisend bewegt werden, während sich das polymerisierende Material noch im Gelzustand befindet.

DE 25 44 245 erwähnt weiterhin die Möglichkeit die IR-reflektierenden Pigmente auch in Formmassen einzuarbeiten. Die Pigment sollen sich dann bei der Verarbeitung durch Kalandrieren, Extrudieren oder Spritzgießen weitgehend oberflächenparallel ausrichten.

EP-A 0 548 822 beschreibt lichtdurchlässige, IR-reflektierende Körper mit Sonnenschutz- und Wärmedämmwirkung, wie Platten, Stegplatten oder Lichtkuppeln, mit einer Transmission T im sichtbaren Bereich von 45 bis 75 % (Lichttransmissionsgrad für Tageslicht (Normlichtart D65) $\tau_{D65}$), einem Gesamtenergiedurchlaßgrad g von 30 bis 60 % und einem Verhältnis T/g bzw. $\tau_{D65}$/g >1,15 (nach DIN 67 507), die sich aus einem ein steifen, amorphen Basismaterial aus lichtdurchlässigem Kunststoff und einem lichtdurchlässigen Überzugsmaterial mit einem Gehalt von 20 bis 40 Gew.-% an IR-reflektierenden Teilchen, die aus einer 60 bis 120 nm dicken Schicht von Titandioxid auf einem blättchenförmigen Trägerpigment bestehen, durch Coextrusion oder Beschichtungen wie Lackieren oder durch Reverse-Roll-Coating herstellen lassen. Die IR-reflektierenden Teilchen sind dabei in einer 5 bis 40 Mikrometer dicken, an dem Basismaterial haftenden Überzugsschicht aus einem transparenten, wasserunlöslichen Bindemittel enthalten und parallel zur Oberfläche ausgerichtet. In den Beispielen werden $TiO_2$-Pigmente vom Rutil-Typ eingesetzt. Für die Coextrusion wird empfohlen, ein Bindemittel für die IR-reflektierende Schicht mit einer niedrigeren Schmelzviskosität als der des Basismaterials zu wählen. Um den Bruch der Pigmente zu vermeiden, wird ein Zweischneckenextruder mit gegenläufigen dicht kämmenden Schnecken verwendet und das Pigment direkt in die Schmelze eingearbeitet.

Handelsüblich sind z.B. Stegmehrfachplatten aus Polymethylmethacrylat mit coextrudierter IR-reflektierender Ausrüstung gemäß EP-A 0 548 822. Ebenso sind Stegmehrfachplatten aus Polycarbonat mit entsprechender IR-reflektierender Ausrüstung bekannt, wobei sich zum Zweck verbesserter Witterungsbeständigkeit auf der coextrudierten Pigmentschicht noch eine weitere coextrudierte Schicht enthaltend UV-Absorber befindet.

DE 196 18 569 A1 beschreibt mehrschichtige Interferenzpigmente, bestehend aus einem transparenten Trägermaterialien, die mit alternierenden Schichten von Metalloxiden mit niedriger und hoher Brechzahl beschichtet sind, wobei die Differenz der Brechzahl mindestens 0,1 beträgt. Auf diese Weise können z. B. Glimmerplättchen mit einer alternierenden Schicht aus $TiO_2/SiO_2/TiO_2$ versehen sein. Pigmente, wie sie in der DE 196 18 569 A1 beschrieben werden, eignen sich zur Pigmentierung von Agrarfolien, um die Infrarotstrahlung der Sonne fern zu halten und so eine übermäßige Erwärmung, z. B. von Gewächshäusern, zu verhindern.

EP-A 0 733 754 beschreibt Stegmehrfachplatten aus einem schlagzäh modifizierten Polymethylmethacrylat. Je nach Schlagzähigkeit des eingesetzten Materials wird ab einer definierten Mindestdicke des Obergurtes der Stegmehrfachplatten der Vorteil hoher Bruchbeständigkeit, insbesondere bei der Belastung durch Hagelschlag, erreicht. Dabei wird eine Belastbarkeit im Hagelbeschußtest mit Polyamidkugeln von mindestens 2 J, bevorzugt mindestens 5 J, angestrebt. Weiterhin wird erwähnt, daß es möglich ist, die erfindungsgemäßen Stegmehrfachplatten zusätzlich an der Außen- oder Innenseite mit funktionellen Schichten, wie Kratzfest-, Antireflex-, wasserspreitenden oder auch IR-reflektierenden Beschichtungen auszurüsten.

JP-OS 08-53555 beschreibt IR-reflektierende Platten aus Acryl-Kunststoff, enthaltend Schlagzähmodifizierer, basierend auf Butylacrylat enthaltenden, vernetzten Emulsionpolymerisaten, sowie IR-reflektierende Pigmente in Mengen von 0,5 bis 30 Gew.-%. Die möglichen Schichtdicken werden von 10$\mu$ m bis 5 mm für Platten mit coextrudierten Schichten bzw. für Vollplatten angegeben. Die Verarbeitung der Pigmente mit dem schlagzähmodifizierten Acryl-Kunststoff erfolgt offenbar zunächst durch Vermischen von Pigment und Granulat im trockenen Zustand und anschließende Extrusion zu einem Granulat.

JP-OS 08-52335 beschreibt IR-reflektierende Platten oder Folien mit einer Dicke von mindestens 0,5 mm aus Polycarbonat, die mit coextrudierten Schicht aus einem schlagzähmodifiziertem Acryl-Kunststoff, enthaltend IR-reflektierende Pigmente in Mengen von 0,5 bis 20 Gew.-%, versehen werden. Die coextrudierten Schichten werden mit Stärken von 20 bis 300 μm angegeben. Die Verarbeitung der Pigmente mit dem schlagzähmodifizierten Acryl-Kunststoff erfolgt durch trockenenes Vermischen von Pigment und Granulat in einem Taumelmischer und anschließende Extrusion zu einem Granulat.

**Aufgabe und Lösung**

Gemäß EP-A 0 733 754 werden Stegmehrfachplatten mit hoher Witterungsbeständigkeit und sehr guter Beständigkeit gegen Hagelschlag erhalten. Für eine zusätzliche IR-reflektierende Ausrüstung empfiehlt die EP-A 0 733 754 das Aufbringen einer funktionellen IR-reflektierenden Schicht, wie sie z.B. aus der EP-A 0 548 822 bekannt ist. Es hat sich jedoch gezeigt, daß bei dieser Vorgehensweise der Nachteil besteht, daß die zusätzliche, z. B. coextrudierte Pigmentschicht, die eine hervorragende IR-Reflektion vermittelt, nicht so hagelbeständig ist, wie eine Platte ohne zusätzliche funktionelle Schicht. Bei Hagelbelastung erweist sich die IR-reflektierende Schicht, die z. B. 25 Gew.-% IR-reflektierendes Pigment enthalten kann, gegenüber dem darunterliegenden Schlagzähen Polymethylmethacrylat als spröde. Dies kann bei Hageleinwirkung zur Ausbildung winziger Risse in der IR-reflektierenden Schicht führen. Diese zunächst kaum sichtbaren Risse können sich dann, wenn die Platte bestimmungsgemäß der Witterung ausgesetzt ist, fortsetzen, so daß zumindest nach einiger Zeit ein Abblättern der IR-reflektierenden Schicht auftreten kann.

DE 25 44 245 erwähnt die Möglichkeit die IR-reflektierenden Pigmente auch in Formmassen einzuarbeiten, wobei sich die Pigment in Zuge der Verarbeitung weitgehend oberflächenparallel ausrichten. Es hat sich jedoch gezeigt, daß auf diese Weise nicht eine der EP-A 0 548 822 entsprechende Wirkung erzielt werden kann. Die Ausrichtung der Teilchen in einem Kunststoffkörper aus z. B. extrudierten Formmasse mit darin gleichmäßig verteilten IR-reflektierendem Pigment ist nicht so gut wie bei einer coextrudierten oder lackierten separaten Schicht. Ein Problem scheint dabei auch allgemein die recht hohe Bruchanfälligkeit entsprechender Teilchen zu sein. Die weniger gute oberflächenparallele Ausrichtung in Kombination mit vergleichsweise hohem Bruchanteil führen im allgemeinen zu unbefriedigenden Ergebnissen.

Dies gilt insbesondere für Kunststoffkörper mit vergleichsweise komplizierter Geometrie, die von der einfachen Plattenform abweichen, und bei deren Herstellung während der Extrusion unterschiedliche Schmelzeströmungsrichtungen und Scherkräfte auftreten, die die Pigmentteilchen in verschiedene Ausrichtungen zwingen und damit auch insgesamt höheren mechanischen Belastungen aussetzen. Zu nennen sind insbesondere Hohlkörper, wie Stegdoppelplatten und in besonderer Weise kompliziertere Hohlkörper wie Stegmehrfachplatten, Fachwerkplatten etc..

JP-OS 08-53555 und JP-OS 08-52335 beschreiben die Extrusion und Coextrusion von schlagzähmodifiziertem Acryl-Kunststoff enthaltend IRreflektierende Pigmente. Da beide Komponenten unter trockenen Bedingungen vermischt werden, ist ein hoher Anteil an Pigment-Bruch unvermeidlich. Dies führt dazu, daß die Effiziens der IR-Reflektion im Vergleich zur eingesetzten Pigmentmenge nicht optimal sein kann, da die Pigment-Bruchstücke die Transmission herabsetzen aber IR-Wellen nur schlecht oder gar nicht reflektieren.

Es wurde daher als Aufgabe gesehen ein Verfahren bereitzustellen, das IR-reflektierende und zugleich besonders hagelschlagbeständige Kunststoffkörper mit hoher Witterungsbeständigkeit zugänglich macht.

Die Aufgabe wird gelöst durch ein Verfahren zur Herstellung eines lichtdurchlässigen, IR-reflektierenden Kunststoffkörpers, bestehend ganz oder zumindest teilweise aus einem schlagzähen thermoplastischen Kunststoff, enthaltend 0,01 bis 2 Gew.-% an IR-reflektierenden Teilchen aus, mit einem Metalloxid beschichteten blättchenförmigen Trägerpigmenten, mittels Verarbeitung einer Kunststoffmischung durch Extrusion oder Coextrusion,
dadurch gekennzeichnet,
daß man zunächst eine Vormischung von 5 bis 40 Gew.-% der IR-reflektierenden Teilchen mit einem niedrigviskosen thermoplastischen Kunststoff erzeugt, indem man die IR-reflektierenden Teilchen mit der Schmelze des niedrigviskosen thermoplastischen Kunststoffs bei einer Temperatur von mindestens 280 °C in einer drucklosen, nicht scherenden Zone eines Doppelschnecken-Extruders vermischt, extrudiert, in Granulatform überführt und anschließend das Granulat direkt oder als Schmelze mit dem Granulat oder der Schmelze eines schlagzähmodifizierten Polymethylmethacrylats, bestehend aus einer Polymermatrix und einem Schlagzähmodifizierungsmittel, in einem Extruder vermischt, die Kunststoff-Mischung extrudiert oder zusammen mit einer weiteren Schmelze eines thermoplastischen Kunststoffs in der gewünschten Form coextrudiert und nach den Abkühlen des Extrudats den gewünschten Kunststoffkörper erhält.

Offenbar ist das Pigment in der Granulatform dann besser gegenüber Bruch geschützt, wenn man die IR-reflektierenden Teilchen mit der Schmelze des niedrigviskosen thermoplastischen Kunststoffs bei einer Temperatur von mindestens 280 °C in einer drucklosen, nicht scherenden Zone eines Doppelschnecken-Extruders vermischt.

Ebenfalls nicht vorhersehbar war es, daß die Hagelbeständigkeit gegenüber schlagzähem Polymethylmethacrylat ohne Zusatz von IR-reflektierenden Pigment zunimmt. Dies ermöglicht es entweder, Körper mit höherer Hagelbeständigkeit bereitzustellen oder aber die Menge des in der Formmasse enthaltenen Schlagzähmodifizierers zu reduzieren. Letzteres führt zur Kostenersparnis, da das Schlagzähmodifizierungsmittel stets aufwendiger in der Herstellung ist als die Polymethylmethacrylat-Matrix.

Gegenüber den bekannten Stegmehrfachplatten aus Polymethylmethacrylat mit coextrudierter IR-reflektierender Ausrüstung besteht der Vorteil, das eine verbesserte Hagelfestigkeit und damit verbesserte Langzeitbeständigkeit erreicht wird. Coextrusionsschichten mit hohem Pigmentanteil und damit das Risiko erhöhter Sprödigkeit bei Hageleinwirkung und der damit verbundenen Rißbildung sind nicht notwendig.

**Ausführung der Erfindung**

Das Herstellungsverfahren

Die Erfindung betrifft ein Verfahren zur Herstellung eines lichtdurchlässigen, IR-reflektierenden Kunststoffkörpers, bestehend ganz oder zumindest teilweise aus einem schlagzähen thermoplastischen Kunststoff, enthaltend 0,01 bis 2, bevorzugt 0,1 bis 1,5, besonders bevorzugt 0,5 bis 1,3 Gew.-% an IR-refiektierenden Teilchen aus, mit einem Metalloxid beschichteten blättchenförmigen Trägerpigmenten.

Die Verarbeitung erfolgt durch Extrusion von Formmassen, indem man zunächst eine Vormischung von 5 bis 40 Gew.-% der IR-reflektierenden Teilchen mit einem niedrigviskosen thermoplastischen Kunststoff erzeugt, wobei man die IR-reflektierenden Teilchen mit der Schmelze des niedrigviskosen thermoplastischen Kunststoffs bei einer Temperatur von mindestens 280 °C, bevorzugt 290 °C bis 320 °C, in einer drucklosen, nicht scherenden Zone eines Doppelschnecken-Extruders, bevorzugt eines gleichläufigen Doppelschneckenextruders, vermischt, extrudiert, in Granulatform überführt wird und anschließend das Granulat direkt oder als Schmelze mit dem Granulat eines schlagzähmodifizierten Polymethylmethacrylats, bestehend aus einer Polymermatrix und einem Schlagzähmodifizierungsmittel, in einem Extruder vermischt, die Kunststoff-Mischung extrudiert oder zusammen mit einer weiteren Schmelze eines thermoplastischen Kunststoffs in der gewünschten Form coextrudiert und nach den Abkühlen des Extrudats den gewünschten Kunststoffkörper erhält.

Bevorzugt, weil besonders schonend für die enthaltenen IR-reflektierenden Pigmente, ist es, das Granulat der Vormischung mit dem Granulat des eines schlagzähmodifizierten Polymethylmethacrylats zu vermischen und diese trockene Mischung beim Eintrag in den Extruder gemeinsam aufzuschmelzen. Das Granulat der Vormischung kann auch in die Schmelze des schlagzähmodifizierten Polymethylmethacrylats gegeben werden. Hier ist es jedoch schwierig eine gleichmäßige Verteilung in der Masse ohne zu hohen Bruchanteil der Pigmente zu erreichen. Auch möglich, jedoch weniger bevorzugt ist es, die Granulate getrennt, z. B. in einem Haupt- und einem Nebenextruder zu schmelzen und anschließend die Schmelzeströme in einem Extruder, meist dem Hauptextruder, zu vereinen. Es scheint weniger schonend für die Pigmente zu sein, wenn die Vormischung in ihrer konzentrierten Form aufgeschmolzen und zunächst in dieser Form verarbeitet wird.

Der Bruchanteil des IR-reflektierenden Pigments kann offenbar noch weiter reduziert werden, wenn man von der Vormischung ein Granulat erzeugt, welches durch Abschlag des Extrudats bei einer Temperatur bzw. Oberflächentemperatur von mindestens 50, bevorzugt bei 60 bis 90 °C erhalten wird. Offenbar besitzt das Granulat in diesem Temperaturbereich noch eine gewisse Weichheit, die Pigmentbruch beim Abschlagvorgang gering hält.

Niedrigviskose thermoplastische Kunststoffe

Niedrigviskose thermoplastische Kunststoffe sind solche mit einer Schmelzviskosität im Bereich von 100 bis 3500, bevorzugt 200 bis 1000 Pas gemessen nach DIN 54 811, Verfahren B 220°C/5 MPa (Düse L/D =4 : 1). Die Schmelzviskosität bei Verarbeitungstemperatur soll im Vergleich zur Schmelzviskosität der Polymethylmethacrylat-Matrix, die im schlagzähen Polymethylmethacrylat vorhanden ist, um 20 bis 80 %, bevorzugt 40 bis 60 % niedriger liegen.

Als niedrigviskoser thermoplastischer Kunststoff ist Polymethylmethacrylat bevorzugt. Die Schmelzviskosität kann z. B. 200 bis 300 Pas betragen. Geeignete Schmelzindices nach ISO 1133 (230 °C/3,8 kg) können z. B. im Bereich von 6 und 40, bevorzugt 10 bis 30 g/10 min liegen. Das Molekulargewicht $M_w$ (Gewichtsmittel) soll im Bereich von 5 x $10^4$ bis 1,5 x $10^5$ liegen. Geeignet ist z. B. ein Polymethylmethacrylat, das aus 80 bis 92, bevorzugt 84 bis 96 Gew.-% Methylmethacrylat-Einheiten und aus 8 bis 20, bevorzugt 4 bis 16 Gew.-% von weicheren Monomeren besteht. Zu nennen sind z. B. Hydroxyethylmethacrylat, Ethylacrylat, Butylacrylat oder bevorzugt Methylacrylat. Das gewünschte Fließverhalten des thermoplastischen Kunststoffs läßt sich z. B. auch durch Mischung von höher viskoseren Kunststoffen mit sehr niedrig viskosen Kunststoffen, sogenannten Fließverbesserern, erreichen.

Da dem schlagzähmodifizierten Polymethylmethacrylat nur vergleichsweise geringe Mengen der Vormischung enthaltend das blättchenförmige Trägerpigment zugesetzt werden, kommen für die Vormischung außer Polymethylmethacrylat auch andere niedrigviskose thermoplastischen Kunststoff in Betracht solange dadurch die Eigenschaften schlagzähmodifizierten Polymethylmethacrylat nur unwesentlich oder nicht merklich beeinträchtigt werden. Geeignet sein kann z. B. auch Polyethylen sein.

IR-reflektierende Pigmente

Geeignete IR-reflektierende Pigmente, IR-reflektierende Teilchen aus, mit einem Metalloxid beschichteten plättchenförmigen Trägerpigmenten, sind z. B. aus DE 25 44 245 B2, EP-A 548 822, DE 196 18 569 A1 bekannt. IR-reflektierende Teilchen sind bekannt, z.B. als sogenannte Perlglanzpigmente. Sie sind schicht- bzw. blättchenförmig aufgebaut. In der Regel haben sie einen Durchmesser von 20 bis 100 $\mu$m.

Physikalisch beruht die Infrarotreflexion auf einer doppelten Reflexion des Lichtes an der Ober- und Unterseite der oberflächenparallel ausgerichteten Teilchen. Je nach der Dicke des Teilchens und der Wellenlänge des eingestrahlten Lichtes können sich die an der Oberseite und der Unterseite des Teilchens reflektierten Strahlen durch Interferenz entweder verstärken oder auslöschen. Ein Verstärkung der reflektierten Strahlung tritt bei senkrechtem Strahlungseinfall ein, wenn

$$d = (2x - 1) \, L_r / 4n$$

ist, wobei d die Dicke des Teilchens, x = 1, $L_r$ die Wellenlänge der reflektierten Strahlung und n der Brechungsindex des Teilchens bei dieser Wellenlänge ist. Dagegen tritt Auslöschung bzw. Abschwächung des reflektierten Lichtes ein, wenn

$$d = (x - 1) \, L_t / 2n$$

ist, wobei hier x = 2 gilt und $L_t$ die Wellenlänge des Lichts ist, das in diesem Falle nicht reflektiert, sondern durchgelassen wird. Aus einer Verbindung der beiden Gleichungen ergibt sich

$$L_r = 2 \, L_t.$$

Daraus folgt, daß bei einer bestimmten Schichtdicke d Licht der Wellenlänge $L_r$ am stärksten reflektiert wird und Licht der halb so großen Wellenlänge $L_t$ am stärksten durchgelassen wird. Die Dicke der Teilchen ist erfindungsgemäß so gewählt, daß das durch das Teilchen hindurchtretende Licht in den sichtbaren Bereich und das von dem Teilchen am stärksten reflektierte Licht in den Infrarotbereich fällt.

Es sind verschiedene Pigmente bekannt, die das angegebene Verhältnis von Dicke und Brechungsindex erfüllen. Dazu gehören Titandioxid, z. B. vom Anatas-Typ, basisches Bleicarbonat oder Wismutoxychlorid. Besonders vorteilhaft ist Titandioxid vom Rutil-Typ, das auf Glimmerteilchen oder ähnlichen blättchenförmigen Mineralstoffen in definierter Schichtdicke niedergeschlagen wurde. Dieses Pigment ergibt lichtstreuende Beschichtungen, die für alle Arten von Dachverglasungen und Oberlichtern besonders gut geeignet sind. Anders als der Anatas-Typ greift dieses Pigment die Kunststoffmatrix nicht katalytisch an und ermöglich so witterungsbeständige, langlebige Produkte. Besonders geeignet da weniger bruchanfällig bei der Verarbeitung sind größenfraktionierte Produkte, denen die Pigmentteilchen einen mittleren Durchmesser bzw. eine Korngröße von 5 bis 25 $\mu$m aufweisen. Die Messung kann mittels Laserbeugung erfolgen. Bevorzugt haben mindestens 95, bevorzugt 98 % der Teilchen eine Größe kleiner 25 $\mu$m.

Bevorzugt setzt man IR-reflektierende Teilchen ein, bei denen das Trägerpigment, z. B. Glimmer, mit einer 90 bis 150 nm, bevorzugt 100 bis 140 nm dicken $TiO_2$-Schicht beschichtet ist (Als Schichtdicke d gilt dann nur die $TiO_2$-Schicht, nicht die Unterlage aus Glimmer).

Geeignet sind auch IR-reflektierende Teilchen, bei denen das Trägerpigment mit alternierenden Schichten von Metalloxiden beschichtet ist. DE 196 18 569 A1 beschreibt entsprechende mehrschichtige Interferenzpigmente, bestehend aus einem transparenten Trägermaterialien, die mit alternierenden Schichten von Metalloxiden mit niedriger und hoher Brechzahl beschichtet sind, wobei die Differenz der Brechzahl mindestens 0,1 beträgt. Auf diese Weise können z. B. Glimmerplättchen mit einer alternierenden Schicht aus $TiO_2/SiO_2/TiO_2$ versehen sein, wobei die Summe der Schichtdicken im Bereich von 150 bis 300 nm liegen kann (Geeignet ist z. B. das handelsübliche Perlglanzpigment AC 870, Hersteller Fa. Merck KGaA, Darmstadt, Deutschland)

Schlagzähes Polymethylmethacrylat

Schlagzähmodifiziertes Polymethylmethacrylat und dessen Herstellung ist z. B. aus EP-A 0 733 754 bekannt.

Das schlagzähe Polymethylmethacrylat kann z. B. aufgebaut aus p1) 4 bis 30 Gew.-% einer Elastomerphase aus p2) 70 bis 96 Gew.-% einer thermoplastischen Matrixphase aus Polymethylmethacrylat, das bis zu 20 Gew.-Teilen, bezogen auf 100 Gew.-Teile P, an geeigneten Comonomeranteilen enthalten kann, wobei die Brechungsindices der Elastomerphase E und der Matrixphase M um maximal n ≤ 0,02 voneinander abweichen und wobei die Summe von p1) + p2) 100 Gew.-% ausmacht.

Die Elastomerphase aus vernetzter Polymerphase ist aus 60 bis 99,9 Gew.-Teilen Alkylacrylat und/oder Arylacrylat, aus 0,1 bis 10 Gew.-Teilen geeigneten Vernetzungsmitteln und gegebenenfalls aus 0 bis 30 Gew.-Teilen an geeigneten monofunktionellen ethylenisch ungesättigten Monomeren aufgebaut.

Vorzugsweise werden als Alkylacrylate $C_2$ - $C_{10}$-Alkylacrylate eingesetzt, wie beispielsweise Ethylacrylat, Propylacrylat, iso-Propylacrylat, Amylacrylat, Hexylacrylat, Octylacrylat, Decylacrylat, sowie besonders bevorzugt Butylacrylat und 2-Ethylhexylacrylat. Bevorzugte Acrylate sind Phenylacrylat, 2-Phenylethylacrylat, 3-Phenyl-1-propylacrylat, 2-Phenoxyethylacrylat, 2-Phenoxyethoxyethylacrylat, sowie besonders bevorzugt Benzylacrylat. Die Vernetzungsmittel sind im allgemeinen Verbindungen mit mindestens zwei ethylenisch ungesättigten, radikalisch polymerisierbaren Resten. Als Vertreter für Verbindungen mit zwei ethylenisch ungesättigten, radikalisch polymerisierbaren Resten seien beispielhaft genannt: (Meth)acrylester von Diolen, wie beispielsweise Ethylenglykoldi(meth)acrylat oder 1,4-Butandioldi(meth) acrylat, aromatische Verbindungen, wie beispielsweise Divinylbenzol, sowie Verbindungen mit mindestens einer Allylgruppe, wie beispielsweise Allyl(meth)acrylat. Als Vernetzungsmittel mit drei oder mehr ethylenisch ungesättigten, radikalisch polymerisierbaren Resten seien beispielhaft Triallylcyanurat, Trimethylolpropantri(meth)acrylat sowie Pentaerythritetra(meth)acrylat genannt. Weitere Beispiele hierzu werden beispielsweise in US-P 4,513,118 angegeben.

Die gegebenenfalls in 0 bis 30 Gew.-Teilen in der Elastomerphase enthaltenen Comonomeren, dienen vornehmlich der Angleichung des in der Regel niedrigeren Brechungsindex der Elastomerphase an denjenigen der Matrixphase M. Vorzugsweise werden also Comonomere mit vergleichsweise hohen Brechungs-indices gewählt werden, wie beispielsweise radikalisch polymerisierbare aromatische Verbindungen. Beispielhaft seien genannt: Vinyltoluol, Styrol oder α-Methylstyrol, die in solchen Mengen verwendet werden, daß sie die Witterungsbeständigkeit des schlagzähen Polymethylmethacrylats nicht beeinträchtigen.

Die mit der Elastomerphase zumindest zu 5 Gew.-% kovalent verbundene Matrixphase M besteht aus einem Polymethylmethacrylat P, das aus 80 bis 100 Gew.-Teilen Methylmethacrylat-Einheiten aufgebaut ist, und weist eine Glasübergangstemperatur von wenigstens 70 °C auf. Weiterhin können im Polymethylmethacrylat 0 bis 20 Gew.-Teile weitere ethylenisch ungesättigte, radikalisch polymerisierbare Comonomereinheiten anwesend sein, vorzugsweise Alkyl (meth)acrylate mit 1 bis 4 Kohlenstoffatomen im Alkylrest. Das mittlere Molelulargewicht $M_W$ des Polymethylmethacrylats beträgt günstigerweise zwischen $10^4$ und $10^6$, vorzugsweise zwischen $3 \times 10^4$ und $5 \times 10^5$ Dalton (zur Bestimmung von $M_W$ vergleiche beispielsweise H.F. Mark et.al., Encyclopedia of Polymer Science and Engineering, 2nd Ed., Vol. 10, Seiten 1ff, J. Wiley, New York, 1989).

Vorzugsweise ist die Elastomerphase Bestandteil zwei- oder mehrstufiger Emulsionspolymerisate , die in der äußeren Hülle aus dem die Matrixphase bildenden Polymethylmethacrylate bestehen. Besonders bevorzugt sind Emulsionspolymerisate mit einem wenigstens dreistufigen Aufbau, gebildet aus einem Kern aus Polymethylmethacrylat , einer ersten Schale S1 aus der Elastomerphase und einer zweiten Schale S2 aus Polymethylmethacrylat, wobei sich weitere Schalen entsprechend den Schalen S1 und S2 alternierend anschließen können. Der Anteil der Emulsionspolymerisate am schlagzähen Polymethylmethacrylat beträgt zwischen 5 und 70 Gew.-%, vorzugsweise zwischen 10 und 50 Gew.-%, wobei die restlichen Gewichtsanteile von dem nicht in den Latexteilchen enthaltenen Polymethylmethacrylat-Kunststoff ausgemacht werden.

Vorzugsweise wird das schlagzähe Polymethylmethacrylat durch Abmischen des Emulsionspolymerisats mit dem Polymethylmethacrylat hergestellt, wobei beispielsweise die Bestandteile gemischt werden und anschließend die Wasserphase und die Emulgatoren abgetrennt werden oder wobei zunächst das Emulsionspolymerisat aus der wäßrigen Phase isoliert wird und anschließend mit dem, beispielsweise durch kontinuierliche Substanzpolymerisation hergestellten Polymethylmethacrylat in der Schmelze gemischt wird. Insgesamt sollen die Latexteilchen, die das Emulsionspolymerisat bilden, einen Durchmesser zwischen 0,1 und 3 μm, bevorzugt zwischen 0,15 und 1 μm aufweisen. Prinzipiell ist der Aufbau solcher Latexteilchen und die Isolierung des Emulsionspolymerisats für zweistufige Emulsionspolymerisate beispielsweise in EP-Patent 0 033 999 (= US-Patent 4,543,383) und für dreistufige Emulsionspolymerisate beispielsweise in EP-Patent 0 113 925 (= US-Patent 4,513,118) beschrieben. Bei der wäßrigen Emulsionspolymerisation arbeitet man zweckmäßigerweise im neutralen oder leicht sauren pH-Bereich, wobei der Verwendung langkettiger Alkylsulfate bzw. Alkylsulfonate als Emulgatoren günstig ist. Als Polymerisationsinitiatoren dienen zweckmäßig die einschlägig bekannten Azoverbindungen bzw. organische oder anorganische Peroxide, wie beispielsweise Persulfate, die im allgemeinen in Mengen zwischen $10^{-3}$ und 1 Gew.-%, bezogen auf die Monomeren, verwendet werden: Zur Einstellung des zuvor beschriebenen Molekulargewichts $M_W$ des im Emulsionspolymerisat anwesenden Polymethylmethacrylats dienen die einschlägig bekannten Molekulargewichtsregler, wie beispielsweise Mercaptoverbindungen, wie 2-Ethylhexylthioglykolat oder tert.-Dodecylmercaptan.

Besonders bevorzugt sind solche Emulsionspolymerisate, die im einem Extruder coaguliert und entwässert werden. Die Schmelze wird dabei in der Entwässerungszone des Extruders in mehrere Abschnitte unterteilt, die jeweils in voneinander getrennten Schneckengängen gefördert werden. Die Schmelzephase wird dabei in wenigstens einem dieser Schneckengänge im Einzugsspalt der Doppelschnecke unter Bildung eines örtlich eng begrenzten Druckgradienten zu einem zusammenhängenden Schmelzekuchen gestaut. Dabei wird das Wasser vor der Grenze des Schmelzekuchens unter der Wirkung der Schwerkraft derart nach unten durch wenigstens eine Abzugsöffnung abfließen gelassen, daß der Schmelzekuchen nicht mit einer zusammenhängenden Wasserphase in Berührung steht. Dadurch werden die im Wasser enthaltenen Zusatzstoffe und Verunreinigungen effektiv entfernt, so das ein besonders witterungsstabiles nicht zur Vergilbung neigendes Material erhalten wird (s. dazu EP-A 0 683 028 und als zweistufiges Verfahren DE 197 18 597 C1).

Kunststoffkörper

Kunststoffkörper, herstellbar nach dem erfindungsgemäßen Verfahren, bestehend aus der verfahrensgemäß erhaltenen Kunststoffmischung, weisen eine Hagelbeständigkeit in der Hagelschlagprüfung nach SIA V280 (Schweizer Norm SN Bauwesen 564 280, Ausgabe 1996, Prüfung 9, Test modifiziert durch die Verwendung mit Polyamidkugeln mit ca. 20 mm Durchmesser und Durchführung ohne Eisschuppen) von mindestens 4 J, bevorzugt mindestens 4,5 J, besonders bevorzugt mindestens 5 J. Die Hagelbeständigkeit $H_{20}$ ist die niedrigste gemessene Energie in [J], die mit 20mm Kugeln noch einen Bruch der Probe verursacht.

Die Selektivitätskennzahl SKZ T/g s.o. nach DIN 67 507 beträgt mehr als 1,15, bevorzugt mindestens 1,2 oder 1,3 bis 1,4 auf. (T = Lichttransmissionsgrad für Tageslicht (Normlichtart D65) $\tau_{D65}$, g = Gesamtenergiedurchlaßgrad, SKZ = Verhältnis T/g bzw. $\tau_{D65}$/g).

Der Kunststoffkörper kann ganz oder teilweise aus der Kunststoff-Mischung bestehen. Bevorzugt handelt es sich um eine flache Platte oder einen Hohlkörper, insbesondere eine Stegmehrfachplatte, bevorzugt eine Stegdreifach- oder Stegvierfachplatte, besonders bevorzugt eine Stegdoppelplatte. Auch andere Geometrien wie z. B. Stegplatten mit schrägen Stegen, sogenannte Fachwerkplatten, sind möglich.

Der Kunststoffkörper kann ganz aus der Kunststoff-Mischung bestehen und z. B. die Form einer Stegdoppelplatte haben. Dies hat den Vorteil, daß relativ gute SKZ-Werte erhalten werden können. Bei Stegdreifach- oder Stegvierfachplatten, die ganz aus der Kunststoff-Mischung bestehen, ist die SKZ in der Regel schlechter als bei Stegdoppelplatten, da der Lichttransmissionsgrad für Tageslicht (T bzw. $\tau_{D65}$) hier stärker abfällt als die Gesamtenergiedurchlaßgrad für Strahlungsenergie (g) und das Verhältnis T/g somit abnimmt.

Der Kunststoffkörper kann auch nur teilweise aus der Kunststoff-Mischung bestehen, wobei der teilweise Anteil der coextrudierte Gurt einer Stegmehrfachplatte, mit einer Dicke von 1 bis 6, bevorzugt 2 bis 4 mm sein kann. Dies hat den Vorteil, daß praktisch beliebige Stegmehrfachplatten Stegdreifach- oder Stegvierfachplatten mit gleich guter SKZ und Hagelschlagbeständigkeit realisiert werden können. Dabei ist der Gurt solcher Platten ausreichend dick, um die gewünschten SKZ-Werte auch mit niedrigen Konzentrationen von IR-reflektierenden Teilchen zu erhalten.

Der Kunststoffkörper kann zweckmäßigerweise je nach Verwendungzweck z. B. einen Lichttransmissionsgrad für Tageslicht (T bzw. $\tau_{D65}$) im Bereich von 10 bis 70, bevorzugt 15 bis 55, z. B. 20 bis 40 % aufweisen.

Die bevorzugte Verwendung des Kunststoffkörpers erfolgt als Bedachungs- oder Fassadenelement, z. B. für Gewächshaus- oder Wintergärtenbedachungen oder für Lichtbänder in Treppenhäusern etc..

Von der dem Licht zugewandten Seite weisen die Kunststoffkörper einen rosa, perlmutt-ähnlich glänzenden Farbeindruck auf, wie er auch von handelsüblichen IR-reflektierend ausgerüsteten Kunststoffkörpern bekannt ist. In der Durchsicht gegen das Licht erhält man einen grünlichen Farbeindruck. In vielen Fällen möchte man diesen grünlichen Farbeindruck mildern, indem man ein lichtstreuendes Pigment, z. B. ein Weißpigment, z. B. Bariumsulfat, in Mengen von 0,5 bis 5 Gew.-% zusetzt. Die hat den technischen Vorteil, daß der Blendeffekt bei durchscheinender Sonne gemildert wird, indem das Licht gestreut wird.

Überraschenderweise wurde auch gefunden, daß die Hagelschlagbeständigkeit nicht abnimmt, sogar zunehmen kann, wenn ein Weißpigment, z. B. Bariumsulfat ($BaSO_4$), in Kombination mit Schlagzähmodifizierer und IR-reflektierendem Pigment vorliegt. Bevorzugt stellt man das Weißpigment, wie auch das IR-reflektierende Pigment als konzentrierte Vormischung in Granulatform, enthaltend z. B. 10 bis 30 Gew.-% Weißpigment, bereit und fügt es während des Extrusionsverfahrens zur Herstellung der Kunststoffkörper hinzu. Man kann das Weißpigment jedoch auch in Pulverform beim Extrusionsvorgang zugeben.

**BEISPIELE**

Beispiel 1:

Herstellung einer Vormischung in Granulatform aus einer niedrigviskosen Polymethylmethacrylat-Schmelze und IR-reflektierendem Pigment

Die Vormischung wird hergestellt, indem 25 Gew.-% des Pigments Iriodin® 9223, Rutil Perllila (Hersteller Fa.

Merck KGaA, Darmstadt, Germany) in die Schmelze eines Polymerisats aus 91 Gew.-% Methylmethacrylat und 9 Gew.-% Methylacrylat bei 300 °C einarbeitet. Dabei wird das Polymerisat in einem gleichläufigen Doppelschneckenextruder (D = 34, Modell Fa. Leistritz) geschmolzen und gefördert. Die Pigmentzugabe erfolgt über eine Seiteneinspeisung, drucklos in einer drucklosen nicht scherenden Extruderzone über ein volumetrisch arbeitendes Schneckendosiersystem. Die Granulierung zu Granulat mit einer Länge von 2,5 bis 3,5 mm und einem Durchmesser von 2 bis 3 mm erfolgt bei 80 °C (Oberflächentemperatur).

Beispiel 2:

Herstellung von 16 mm Stegdoppelplatten aus der Vormischung aus Beispiel 1 und schlagzähmodifiziertem Polymethylmethacrylat.

a) Schlagzähmodifiziertes Polymethylmethacrylat

Schlagzähmodifiziertes Polymethylmethacrylat mit einer Polymermatrix aus einem Polymerisat aus 97 Gew.-% Methylmethacrylat und 3 Gew.-% Methylacrylat mit 15 Gew.-% Anteil an Polybutylacrylat, erhalten durch Abmischen von 64 Gew.-% Polymethylmethacrylat mit 36 Gew.-% eines Kern-Schale-Emulsionspolymerisats der Zusammensetzung 20 Gew.-Teile vernetzter Polmethylmethacrylat-Kern; 44 Gew.-Teile vernetztes Polybutylacrylat-co-Styrol, das den selben Brechungsindex wie Polymermatrix aufweist, als erste Schale sowie 36 Gew.-Teile Polymethylmethacrylat als zweite Schale (Entsprechende Emulsionspolymerisate können z. B. gemäß der EP-A 113 924 erhalten werden).
Anschließend werden 16 mm dicke Stegdoppelplatten durch Extrusion hergestellt, indem das Granulat des schlagzähmodifizierten Polymethylmethacrylats und das Granulat der Vormischung aus Beispiel 1 mit dem IR-reflektierenden Pigment im Verhältnis 133 : 1 gemischt werden und in einem Doppelschneckenextruder bei etwa 240 bis 260 °C durch eine Extrusionsdüse für eine Stegdoppelplatte extrudiert werden. Das Extrudat wird nach dem Austritt aus der Extrusionsdüse in einer Vakuumkalibrierung stabilisiert und abgekühlt.

Beispiel 3 (erfindungsgemäß):

Stegdoppelplatte aus schlagzähem Polymethylmethacrylat mit Weißpigment ($BaSO_4$). Der Zusatz des IR-reflektierenden Pigments erfolgt in Granulatform der beschriebenen Vormischung.
Als Weißpigment wurde $BaSO_4$, enthalten zu 20 Gew.-% in einem Polymerisat aus 97 Gew.-% Methylmethacrylat und 3 Gew.-% Methylacrylat in einer Endkonzentration von 2 Gew.-% zugegeben.

Beispiel 4 (erfindungsgemäß):

Stegdoppelplatte aus schlagzähem Polymethylmethacrylat ohne Weißpigment. (farblos). Der Zusatz des IR-reflektierenden Pigments erfolgt in Granulatform der beschriebenen Vormischung.

Vergleichsbeispiel 5:

Stegdoppelplatte aus schlagzähem Polymethylmethacrylat mit Weißpigment (ohne IR-Pigment).
Als Weißpigment wurde $BaSO_4$, enthalten zu 20 Gew.-% in einem Polymerisat aus 97 Gew.-% Methylmethacrylat und 3 Gew.-% Methylacrylat in einer Endkonzentration von 2 Gew.-% zugegeben.

Vergleichsbeispiel 6:

Stegdoppelplatte aus schlagzähem Polymethylmethacrylat mit Weißpigment. Der Zusatz des IR-reflektierenden Pigments erfolgt durch Zugabe als Schüttgut (in trockener Form, ohne eine Vormischung) zur Schmelze des schlagzähmodifizierten Polymethylmethacrylats.
Die nachstehende Tabelle 1 fast die Eigenschaften der Stegdoppelplatten aus den Bespielen 3 bis 6 zusammen:

Tabelle 1

| Bsp. | IR-Pigment-Zugabe aus Vormischung | IR-Pigment-Zugabe ohne Vormischung | Weißpigment | $\tau_{D65}$[%] | g [%] | SKZ = $\tau_{D65}$/g | Hagel $H_{20}$[J] |
|---|---|---|---|---|---|---|---|
| 3 | + | - | + | 47,3 | 38,0 | 1,24 | 4,4 |

(fortgesetzt)

| Bsp. | IR-Pigment-Zugabe aus Vormischung | IR-Pigment-Zugabe ohne Vormischung | Weißpigment | $\tau_{D65}$[%] | g [%] | SKZ = $\tau_{D65}$/g | Hagel $H_{20}$[J] |
|---|---|---|---|---|---|---|---|
| 4 | + | - | - | 52,2 | 39,7 | 1,31 | 7,3 |
| 5 | - | - | + | 76,0 | 72.9 | 1,04 | 2,9 |
| 6 | - | + | - | 26,7 | 33,8 | 0,79 | 3,9 |

Beispiel 7

Effekt der Schmelzetemperatur bei der Herstellung einer Vormischung, enthaltend IR-reflektierendes Pigment

Eine Vormischung wird analog zu Beispiel 1 hergestellt mit dem Unterschied, daß die Schmelzetemperatur bei der Einarbeitung des Pigments nur 265 °C beträgt.

Die Granulate aus Beispiel 1 und 7 werden geschmolzen und in dünner Schicht mikroskopisch begutachtet.

Zusätzlich wird die Schmelzviskosität nach DIN 54 811, Verfahren B 220 °C / 5 MPa (Düse L/D = 4/1) bestimmt.

Die Granulate werden in einem Extruder geschmolzen und in einem Coextrusionsverfahren (s. z. B. EP-B 548 822, insbesondere Beispiel 4) als ca. 30 μm dicke Coextrusionsschichten auf gleichzeitig extrudierte 16 mm dicke Stegdoppelplatten aus Polymethylmethacrylat aufgetragen. Die Selektivitätskennzahlen (SKZ = T/g bzw $\tau_{D65}$/g) der erhaltenen Platten nach DIN 67 507 werden bestimmt.

Das Ergebnis ist in der nachstehenden Tabelle 2 dargestellt.

Tabelle 2:

| Beispiel | 1 | 7 |
|---|---|---|
| Schmelzetemperatur bei Herstellung der Vormischung | 300 °C | 265 °C |
| Mikroskopie | Nur wenig Pigmentbruch sichtbar | deutlich mehr Pigmentbruch als in Beispiel 1, viel Feinstanteile, Pigmente verrundet |
| Schmelzviskosität nach DIN 54 811, Verfahren B 220 °C / 5 Mpa Düse L/D = 4/1 | 717 Pas | 935 Pas |
| SKZ = $\tau_{D65}$/g | 1,36 | 1,24 |

**Patentansprüche**

1. Verfahren zur Herstellung eines lichtdurchlässigen, IR-reflektierenden Kunststoffkörpers, bestehend ganz oder zumindest teilweise aus einem schlagzähen thermoplastischen Kunststoff, enthaltend 0,01 bis 2 Gew.-% an IR-reflektierenden Teilchen aus, mit einem Metalloxid beschichteten blättchenförmigen Trägerpigmenten, mittels Verarbeitung einer Kunststoffmischung durch Extrusion oder Coextrusion,
**dadurch gekennzeichnet,**
**daß** zunächst eine Vormischung von 5 bis 40 Gew.-% der IR-reflektierenden Teilchen mit einem niedrigviskosen thermoplastischen Kunststoff erzeugt wird, indem die IR-reflektierenden Teilchen mit der Schmelze des niedrigviskosen thermoplastischen Kunststoffs bei einer Temperatur von mindestens 280 °C in einer drucklosen, nicht scherenden Zone eines Doppelschnecken-Extruders vermischt, extrudiert und in Granulatform überführt werden und anschließend das Granulat direkt oder als Schmelze mit dem Granulat oder der Schmelze eines schlagzähmodifizierten Polymethylmethacrylats, bestehend aus einer Polymermatrix und einem Schlagzähmodifizierungsmittel, in einem Extruder vermischt wird, die Kunststoff-Mischung extrudiert oder zusammen mit einer weiteren Schmelze eines thermoplastischen Kunststoffs coextrudiert wird und nach dem Abkühlen des Extrudats der Kunststoffkörper erhalten wird.

2. Verfahren nach Anspruch 1, **dadurch gekennzeichnet, daß** von der Vormischung ein Granulat erzeugt wird, welches durch Abschlag des Extrudats bei einer Temperatur von mindestens 50 °C erhalten wird.

3. Verfahren nach Anspruch 1 oder 2, **dadurch gekennzeichnet, daß** IR-reflektierende Teilchen eingesetzt werden, bei denen das Trägerpigment mit einer 90 bis 150 nm dicken TiO2-Schicht beschichtet ist.

4. Verfahren nach einem oder mehreren der Ansprüche 1 bis 3, daß IR-reflektierende Teilchen eingesetzt werden, bei denen das Trägerpigment mit alternierenden Schichten von Metalloxiden beschichtet ist

5. Verfahren nach Anspruch 4, **dadurch gekennzeichnet, daß** die alternierenden Schichten von Metalloxiden aus TiO$_2$ /SiO$_2$/TiO$_2$ mit einer Summe der Schichtdicken von 150 bis 300 nm bestehen.

6. Verfahren nach einem oder mehreren der Ansprüche 1 bis 3, **dadurch gekennzeichnet, daß** IR-reflektierende Teilchen aus mit einer 90 bis 150 nm dicken TiO$_2$-Schicht versehenen Glimmerplättchen eingesetzt werden.

## Claims

1. Process for the production of an IR-reflective plastics structure which is permeable to light, composed entirely or at least to some extent of an impact-resistant thermoplastic, comprising from 0.01 to 2% by weight of IR-reflective particles, with a metal-oxide-coated lamellar carrier pigment, by means of processing of a plastics mixture through extrusion or coextrusion,
   **characterized in that**
   a premix of from 5 to 40% by weight of the IR-reflective particles with a low-viscosity thermoplastic is first produced, by mixing the IR-reflective particles with the melt of the low-viscosity thermoplastic at a temperature of at least 280°C in an unpressurized, non-shearing zone of a twin-screw extruder, and extruding the mixture and converting it to pellet form, and then, in an extruder, mixing the pellets directly or in the form of a melt with the pellets or the melt of an impact-modified polymethyl methacrylate, composed of a polymer matrix and an impact-modifier, extruding the plastics mixture or coextruding it together with a further melt of a thermoplastic, and obtaining the plastics structure after cooling of the extrudate.

2. Process according to Claim 1, **characterized in that** the premix is used to produce pellets which are obtained by severing the extrudate at a temperature of at least 50°C.

3. Process according to Claim 1 or 2, **characterized in that** IR-reflective particles are used in which the carrier pigment has been coated with a TiO$_2$ layer of thickness from 90 to 150 nm.

4. Process according to one or more of Claims 1 to 3, **characterized in that** IR-reflective particles are used in which the carrier pigment has been coated with alternating layers of metal oxides.

5. Process according to Claim 4, **characterized in that** the alternating layers of metal oxides are composed of TiO$_2$/SiO$_2$/TiO$_2$, where the total of the layer thickness is from 150 to 300 nm.

6. Process according to one or more of Claims 1 to 3, **characterized in that** IR-reflective particles are used which are composed of mica lamellae provided with a TiO$_2$ layer of thickness from 90 to 150 nm.

## Revendications

1. Procédé de fabrication d'un corps en matière synthétique, transparent et réfléchissant l'IR, constitué en tout ou au moins en partie d'une matière synthétique thermoplastique résistant aux chocs contenant de 0,01 à 2 % en poids de particules réfléchissant l'IR en pigments de support en forme de feuillets revêtus d'un oxyde métallique, en traitant un mélange de matière synthétique par extrusion ou coextrusion,
   **caractérisé en ce que**
   on forme d'abord un pré-mélange de 5 à 40 % en poids de particules réfléchissant l'IR et d'une matière synthétique thermoplastique peu visqueuse en mélangeant à une température d'au moins 280°C dans la zone sans pression et non cisaillante d'une extrudeuse à double vis les particules réfléchissant l'IR avec la matière synthétique thermoplastique peu visqueuse fondue, en extrudant et en transformant en granulé et en mélangeant ensuite le granulé dans une extrudeuse, directement ou à l'état fondu, avec le granulé ou le bain de fusion d'un poly(méthacrylate de méthyle) rendu résistant aux chocs et constitué d'une matrice polymère et d'un agent de résistance aux chocs, en extrudant le mélange de matière synthétique ou en le coextrudant avec une autre matière synthétique thermoplastique à l'état fondu, le corps en matière synthétique étant obtenu après refroidissement du produit extrudé.

2. Procédé selon la revendication 1, **caractérisé en ce que** l'on forme à partir du pré-mélange un granulé qui est obtenu en fractionnant l'extrudé à une température d'au moins 50°C.

3. Procédé selon les revendications 1 ou 2,
   **caractérisé en ce que** l'on utilise des particules réfléchissant l'IR dont le pigment de support est revêtu d'une couche de $TiO_2$ d'une épaisseur de 90 à 150 nm.

4. Procédé selon l'une ou plusieurs des revendications 1 à 3, dans lequel on utilise des particules réfléchissant l'IR dont le pigment de support est revêtu de couches alternées d'oxydes métalliques.

5. Procédé selon la revendication 4, **caractérisé en ce que** les couches alternées d'oxydes métalliques sont constituées de $TiO_2/SiO_2/TiO_2$, la somme des épaisseurs des couches étant comprise entre 150 et 300 nm.

6. Procédé selon l'une ou plusieurs des revendications 1 à 3, **caractérisé en ce que** l'on utilise des particules réfléchissant l'IR constituées de plaquettes de mica dotées d'une couche de $TiO_2$ d'une épaisseur de 90 à 150 nm.

**IN DER BESCHREIBUNG AUFGEFÜHRTE DOKUMENTE**

**In der Beschreibung aufgeführte Patentdokumente**

- DE 2544245
- EP 0548822 A
- DE 19618569 A1
- EP 0733754 A
- JP 8053555 A
- JP 8052335 A
- DE 2544245 B2
- EP 548822 A
- US 4513118 P
- EP 0033999 A
- US 4543383 A
- EP 0113925 A
- US 4513118 A
- EP 0683028 A
- DE 19718597 C1
- EP 113924 A
- EP 548822 B

**In der Beschreibung aufgeführte Nicht-Patentliteratur**

- **H.F. Mark.** Encyclopedia of Polymer Science and Engineering. J. Wiley, 1989, vol. 10, 1